# EUROPÄISCHE PATENTSCHRIFT

(11) **EP 3 359 367 B1**
(45) Veröffentlichungstag und Bekanntmachung des Hinweises auf die Patenterteilung: **28.07.2021**
(21) Anmeldenummer: 16767204.7
(22) Anmeldetag: 13.09.2016
(51) Int. Cl.: B29C 49/02, B29C 49/48, B29C 49/56, B29C 49/06, B29C 49/12, B29L 31/00

(54) **VORRICHTUNG UND VERFAHREN ZUM UMFORMEN VON KUNSTSTOFFVORFORMLINGEN ZU KUNSTSTOFFBEHÄLTNISSEN MIT KOPPLUNGSEINRICHTUNG**
APPARATUS AND METHOD FOR DEFORMING PLASTICS PARISONS TO FORM PLASTICS CONTAINERS WITH COUPLING DEVICE
DISPOSITIF ET PROCÉDÉ POUR MOULER DES PRÉFORMES EN MATÉRIAU SYNTHÉTIQUE EN RÉCIPIENTS EN MATÉRIAU SYNTHÉTIQUE À L'AIDE D'UN DISPOSITIF DE COUPLAGE

(30) Priorität: 06.10.2015 DE 102015117017
(43) Veröffentlichungstag der Anmeldung: 15.08.2018
(73) Patentinhaber: Krones AG, 93073 Neutraubling (DE)
(72) Erfinder: HÖLLRIEGL, Thomas, 93073 Neutraubling (DE)
(74) Vertreter: Bittner, Bernhard
(86) Internationale Anmeldenummer: PCT/EP2016/071582
(87) Internationale Veröffentlichungsnummer: WO 2017/060047

(56) Entgegenhaltungen:
- DE-U1-202013 009 941
- US-A1- 2007 292 550
- US-A1- 2010 203 185
- US-A1- 2013 115 326

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt.

Die Blasformen sind dabei üblicherweise wenigstens mittelbar an einer Hauptwelle angeordnet und weisen wenigstens ein Bodenelement und zwei Blasform(seiten)teile auf, wobei die Seitenteile an Formträgern angeordnet sind. Die Blasformteile bilden einen Hohlraum aus, innerhalb dessen Kunststoffvorformlinge durch Streckblasformung oder Blasformung zu Kunststoffbehältnissen umgeformt werden. Um die Kunststoffvorformlinge in der Blasform anzuordnen bzw. die fertig geblasenen Behältnisse aus der Blasform entnehmen zu können, ist mindestens ein Formträger schwenkbar an der Hauptwelle angeordnet und das Bodenelement kann nach dem Öffnen der Blasform in vertikaler Richtung nach unten bewegt werden.

Dazu ist üblicherweise ein externes Kurvenelement vorgesehen, welches allerdings den Nachteil hat, dass es ein erhöhtes Risiko für Störungen aufweist, da der Formträger auch geschlossen wird, wenn der Übergabevorgang der Vorformlinge oder der fertigen Behältnisse fehlerhaft ist. Zudem ist bei der Bereitstellung eines externen Kurvenelements ein größerer Platzbedarf notwendig und die Blasformeinrichtung weist ein insgesamt erheblich höheres Gewicht auf.

Aus der US 2010/0203185 A1 ist dabei eine Öffnungs- und Schließbewegung zweier Blasformhälften bekannt, wobei eine Blasformhälfte über ein Flächenelement mit einer Außenwelle verbunden ist, so dass sich die Außenwelle automatisch dreht, wenn die Blasformhälfte um eine Welle, an welcher die Blasformhälften angeordnet sind, verschwenkt wird. Die Kopplung der Bewegung des Bodens mit den Blasformhälften erfolgt demnach über eine weitere externe Außenwelle, so dass zwei separate Wellen benötigt werden, eine zum Verschwenken der Blasformhälften und eine um die Kopplung durchzuführen.

Der vorliegenden Erfindung liegt daher die Aufgabe zugrunde, eine Vorrichtung und ein Verfahren zur Verfügung zu stellen, welche eine Hub- und Senkbewegung der Bodenaufnahme ermöglichen und welche gleichzeitig einen möglichst geringen Platzbedarf benötigen. Daneben soll eine Gewichtsreduzierung ermöglicht und die Prozesssicherheit erhöht werden.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist wenigstens eine Blasformeinrichtung auf, welche wenigstens mittelbar an einer um eine Schwenkachse schwenkbaren Hauptwelle angeordnet ist und welche wenigstens zwei Formträger, ein Bodenelement und zwei Blasformteile aufweist, wobei das Bodenelement und die Blasformteile geeignet sind, einen Hohlraum auszubilden, innerhalb dessen die Kunststoffvorformlinge zu den Kunststoffbehältnissen umformbar sind und das Bodenelement auf einer Bodenaufnahme angeordnet ist. Die Vorrichtung weist weiterhin eine Kopplungseinrichtung auf, welche eine Öffnungsbewegung der Blasformteile mit einer Hub- und Senkbewegung des Bodenelements gegenüber den Blasformteilen (allgemein handelt es sich hierbei insbesondere um eine geradlinige Bewegung) koppelt.

Erfindungsgemäß weist die Kopplungseinrichtung ein - bevorzugt integriertes - Kurvenelement auf, welches derart mit einem weiteren Element (welches ebenfalls bevorzugt ein Bestandteil der Kopplungseinrichtung ist) zusammenwirkt, dass durch ein Öffnen der Blasformeinrichtung, durch Schwenken wenigstens eines Formträgers um die Schwenkachse der Hauptwelle das Kurvenelement und/oder das weitere Element in eine Drehbewegung bezüglich der Schwenkachse oder einer zu der Schwenkachse parallelen Achse versetzbar ist, durch welche die Bodenaufnahme mit dem Bodenelement absenkbar (bzw. allgemein in die oben erwähnte geradlinige Bewegung versetzbar ist, mit der das Bodenelement von den Seitenteilen entfernt oder auf diese zugestellt wird) ist.

Entsprechend wird bevorzugt durch ein Schließen der Formträger das Bodenelement angehoben. Allgemein wird bevorzugt das Bodenelement durch das Schwenken der Formträger entlang einer geradlinigen Richtung, insbesondere einer vertikalen Richtung bewegt. Die Drehbewegung erfolgt dabei insbesondere durch das Kurvenelement selbst oder durch das weitere Element, welches innerhalb des Kurvenelements geführt wird. Vorteilhaft handelt es sich bei dem weiteren Element um eine Rollenanordnung mit wenigstens einer Rolle, welche in dem Kurvenelement führbar ist.

Es wird daher vorgeschlagen eine direkt in die Blasformeinrichtung integrierte Kopplungseinrichtung mit Kurvenelement zum Heben und Senken des Bodenelements vorzusehen, so dass insbesondere auch eine direkte Koppelung zwischen der Drehbewegung des Kurvenelements und/oder des weiteren Elements und der Bewegung des Bodenelements erreicht wird.

Erfindungsgemäß ist die Kopplungseinrichtung direkt an der Hauptwelle angeordnet. Vorteilhaft sind dabei die Hauptwelle und die Kopplungseinrichtung parallel zu einer vertikalen Längsachse der Blasformeinrichtung angeordnet und das Bodenelement ist entlang der vertikalen Längsachse der Blasformeinrichtung bewegbar.

Es wird daher anstelle des oben genannten externen Kurvenelements, beispielsweise über eine Flanschverbindung, eine Kopplungseinrichtung, welche in dieser Ausführungsform bevorzugt als Zylinder ausgebildet ist, mit einem integrierten Kurvenelement an der drehbar gelagerten Hauptwelle angeordnet. Bevorzugt weist die Bodenaufnahme das weitere Element, in Form einer Rollenanordnung auf, welche auf dem Kurvenelement aufliegt bzw. in dem Kurvenelement führbar ist. Durch das Öffnen der Formträger wird die Hauptwelle und damit bevorzugt die Kopplungseinrichtung mit dem integrierten Kurvenelement in Drehbewegung versetzt und die Bodenaufnahme mit dem Bodenelement wird, bevorzugt entlang der vertikalen Längsachse der Blasformeinrichtung, nach unten bewegt. Es wird demnach bevorzugt ein definierter Führungshebel durch das Kurvenelement oder durch die Rollenanordnung mit wenigstens einer Rolle und einem Arm ausgebildet.

Ein Vorteil, das Kurvenelement direkt an der Hauptwelle anzuordnen besteht darin, dass dadurch aufgrund des geringen Platzbedarfs eine im Wesentlichen kompakte Bauweise der Blasform unterstützt wird, da keine zusätzlichen Bauteile an der Blasformeinrichtung angebracht werden müssen. Es können demnach auch bereits bestehende Blasformeinrichtungen mit der erfindungsgemäßen Einrichtung zum Absenken und Anheben des Bodenelements nachgerüstet werden, ohne, dass große konstruktive Veränderungen an den Blasformen vorgenommen werden müssen. Außerdem wird durch die Vermeidung eines externen Kurvenelements die Prozesssicherheit erhöht und eine erhebliche Gewichtseinsparung erreicht. Dadurch, dass das externe Kurvenelement wegfällt, welches sehr wartungsintensiv ist, wird zudem noch die Wartungsfreundlichkeit der Blasformeinrichtungen erhöht.

Bevorzugt ist an dem Bodenelement bzw. der Bodenaufnahme ein elastisches Dämpfungselement angeordnet. Dieses elastische Dämpfungselement, welches bevorzugt als eine elastische Dämpfungsfeder ausgebildet ist, dient dabei dazu, die Bewegung des Bodenelements und der Bodenaufnahme in der Längsrichtung der Blasformeinrichtung abzudämpfen. Vorteilhaft kann durch diese Dämpfungsfeder auch die Bewegungsrichtung des Bodenelements begrenzt werden und insbesondere eine Endposition des Bodenelements, insbesondere beim Absenken bestimmt werden. Gerade in Verbindung mit der hier beschriebene Kopplung der einzelnen Bewegungen hat sich die Verwendung eines Dämpfungselements als besonders vorteilhaft erwiesen, da es insgesamt relativ schnelle Öffnungs- und Schließbewegungen ermöglicht, ohne dass hierdurch die Mechanik zu stark beansprucht wird.

Bei einer vorteilhaften Ausführungsform der Erfindung weist die Vorrichtung einen drehbaren Träger, insbesondere ein Blasrad auf, an dem eine Vielzahl der oben beschriebenen Blasformeinrichtungen angeordnet ist, wobei dieser drehbare Träger vorteilhaft innerhalb eines Reinraums angeordnet ist. Der Reinraum ist vorteilhaft kanalartig ausgebildet und umgibt die Blasformeinrichtungen zumindest teilweise, so dass die Blasformeinrichtungen innerhalb dieses Reinraums bewegbar sind. Bevorzugt ist der Reinraum gegenüber der Umgebung durch mehrere Wandungen abgegrenzt. Dabei ist es auch möglich, dass wenigstens eine Wandung beweglich ausgestaltet ist und sich mit den Blasformen mitdreht, wobei gegeneinander bewegliche Wände vorteilhaft mit einer Dichtungseinrichtung, beispielsweise einem sogenannten Wasserschloss oder einer hydraulischen Dichtung, gegeneinander abgedichtet sind. Bei einer vorteilhaften Ausführungsform der Kopplungseinrichtung ist das in die Kopplungseinrichtung integrierte Kurvenelement vorteilhaft derart ausgebildet, dass es als Nut in der Umfangsrichtung des Führungselements verläuft, so dass die wenigstens eine Rolle der Rollenanordnung innerhalb dieser Nut geführt wird. Vorteilhaft ist diese Rollenanordnung dabei an der Bodenaufnahme angeordnet. Auf diese Weise wird die Bewegung des Bodenelements und der Bodenaufnahme mechanisch durch den Kurvenverlauf des Kurvenelements erzeugt. Vorteilhaft ist dabei an jeder Blasform eine eigene Kopplungseinrichtung mit integrierten Kurvenelement angeordnet. Bevorzugt bewegen sich daher die genannten Kurvenelemente mit dem Träger, an dem die Umformungsstationen angeordnet sind, mit. Vorteilhaft weist das Kurvenelement eine Steigung zwischen 15° und 85° auf, bevorzugt zwischen 30° und 80° und besonders bevorzugt zwischen 45° und 75°. Bevorzugt ist demnach das Kurvenelement relativ steil an der Kopplungseinrichtung angeordnet.

Bevorzugt ist der Kurvenverlauf des Kurvenelements als Ausprägung in der Umfangsrichtung des Führungselements ausgebildet und wenigstens eine Rolle der Rollenanordnung verläuft an einer Oberseite des Kurvenelements. In einer bevorzugten Ausführungsform verläuft wenigstens eine Rolle an der Oberseite des Kurvenelements und wenigstens eine weitere Rolle an der Unterseite des Kurvenelements, so dass das Kurvenelement zwischen wenigstens zwei Rollen aufgenommen wird. Dadurch wird eine höhere Stabilität und eine sicherere bzw. ruhigere Führung der Rollenanordnung an der Kopplungseinrichtung gewährleistet.

Die Führung der Rollenanordnung gegenüber dem Kurvenelement erfolgt dabei vorteilhaft wenigstens bis zu einem vorgegebenen Anschlag, welcher an dem Kurvenelement angeordnet sein kann oder bis zu einem unteren Ende des Kurvenelements. Dieser Anschlag bzw. das untere Ende entsprechen dabei einer Endposition des Bodenelements.

Bei einer bevorzugten Ausführungsform ist ein erster Formträger in einem Winkel zwischen 20° und 60° gegenüber der durch die Hauptwelle definierten Schwenkachse schwenkbar und/oder ein zweiter Formträger in einem Winkel zwischen 1° und 10° gegenüber der durch die Hauptwelle definierten Schwenkachse schwenkbar. Bevorzugt liegt der Schwenkwinkel des ersten Formträgers zwischen 30° und 55°, bevorzugt zwischen 35° und 45° und besonders bevorzugt bei etwa 44°. Der Schwenkwinkel des zweiten Formträgers liegt bevorzugt zwischen 2° und 8°, bevorzugt zwischen 3° und 6° und besonders bevorzugt bei etwa 5°. Die Schwenkachse der Hauptwelle verläuft dabei vorteilhaft in vertikaler Richtung, insbesondere parallel zu einer Längsachse der Blasformeinrichtung. Dabei wäre es auch denkbar, dass ein Formträger stationär an der Hauptwelle angeordnet ist und nur ein Formträger schwenkbar an und/oder mit der Hauptwelle gelagert ist.

Vorteilhaft bestehen dabei bevorzugt der erste Formträger und der zweite Formträger aus unterschiedlichen Materialien, wobei der erste Formträger bevorzugt aus Aluminium besteht und der zweite Formträger bevorzugt aus Edelstahl. Als Materialien sind auch Edelstahl- und Aluminiumlegierungen sowie alle anderen geeigneten Metalle und/oder Kunststoffe denkbar. Vorteilhaft besteht der Formträger mit dem größeren Schwenkwinkel aus dem leichteren Material. Der Vorteil dieser unterschiedlichen Materialien besteht insbesondere in einer Gewichtsreduzierung der Blasformeinrichtung und unterstützt die Schwenkung um unterschiedliche Winkel. Weiterhin weist vorteilhaft nur der zweite Formträger eine Formträgerschale und ein Druckkissen auf. Denkbar wäre aber auch, dass beide Formträger eine Formträgerschale und ein Druckkissen aufweisen. Üblicherweise nehmen die Formträger dann die Formträgerschalen auf und die Formträgerschalen wiederrum die Blasformteile.

Bei einer weiteren vorteilhaften Ausführungsform weist das Bodenelement eine Fixiereinrichtung auf, welche das Bodenelement in einem geschlossenen Zustand der Formträger gegenüber den Blasformteilen fixiert. Diese Fixierung des Bodenelements erfolgt bevorzugt kraftschlüssig und/oder formschlüssig, insbesondere in einer Bewegungsrichtung der Blasformteile, durch entsprechende korrespondierende bzw. ineinanderpassende Ausgestaltungen des Bodenelements und der Blasformteile. Dabei werden bevorzugt die Blasformteile bzw. Formträger erst vollständig verschlossen und das Bodenelement innerhalb der Blasformteile verankert, nachdem das Bodenelement seine endgültige Endposition erreicht hat. Die oben beschriebene Bewegung des Bodenelements erfolgt dabei erst, nachdem die Formträger so weit geöffnet wurden, dass die Fixiereinrichtung des Bodenelements frei liegt, d.h. die Fixierung des Bodenelements gegenüber den Blasformteilen vollständig gelöst wurde.

Weiterhin weist die Vorrichtung eine Verriegelung auf, die zum Verriegeln der beiden Blasformteile miteinander in einem geschlossenen Zustand der Blasform dient. Bevorzugt ist diese Verriegelung zumindest teilweise innerhalb des Reinraums angeordnet. Vorteilhaft ist weiter eine Reckstange vorgesehen, welche in den Hohlraum der Blasform einführbar ist und den Vorformling bevorzugt in Längsrichtung streckt. Bevorzugt ist die Umformungsstation in ihrer Gesamtheit von dem oben genannten Träger entnehmbar.

Bei einer weiteren vorteilhaften Ausführungsform weist die Bodenaufnahme eine Kopplungseinrichtung in Form eines Gestells mit einem integrieren Kurvenelement auf. Durch dieses Gestell wird vorteilhaft das Kurvenelement in Position mit einer drehbar gelagerten Öffnungseinrichtung, welche bevorzugt als Zylinder ausgebildet ist, gehalten. Durch ein Öffnen der Formträger ist die Öffnungseinrichtung in eine Drehbewegung versetzbar, so dass eine Rollenanordnung mit wenigstens einer Rolle an dem Kurvenelement geführt wird, wodurch ein Absenken des Bodenelements entlang der Längsachse der Blasformeinrichtung erzeugt wird. Vorteilhaft erfolgt die Bewegung des Bodenelements nachdem die Formträger geöffnet wurden und das Bodenelement aus der Fixierung gelöst wurde. Bevorzugt wird durch die Drehbewegung der Öffnungseinrichtung eine Drehbewegung der Rollenanordnung um eine zu der Schwenkachse parallelen Achse ausgelöst.

In einer weiteren bevorzugten Ausführungsform ist die Bodenaufnahme drehbar mit dem Bodenelement gelagert und das Kurvenelement ist direkt in das Bodenelement, vorteilhaft in eine Seitenfläche des Bodenelements integriert, wobei das Bodenelement über eine Rollenanordnung mit wenigstens einer Rolle bewegbar ist. Vorteilhaft ist das Bodenelement über eine drehbar gelagerte Kopplungseinrichtung in Form eines Hebels, welcher wenigstens ein Bewegungsgelenk aufweist, mit der Öffnungseinrichtung verbunden. Durch ein Öffnen der Formträger wird die Öffnungseinrichtung in eine Drehbewegung versetzt, so dass eine Rollenanordnung mit wenigstens einer Rolle in dem Kurvenelement des Bodenelements geführt wird und damit ein Absenken des Bodenelements entlang der Längsachse der Blasformeinrichtung erzeugt wird. Dabei erfolgt das Heben oder Senken des Bodenelements erst, nachdem die Formträger geöffnet wurden und das Bodenelement aus der Fixierung gelöst wurde. Durch die Drehbewegung der Öffnungseinrichtung wird wiederum eine Drehung der Rollenanordnung um eine zu der Schwenkachse der Hauptwelle parallelen Achse erzeugt.

Vorteilhaft wird die Bewegung des Bodenelements entlang der Längsachse der Blasform in allen Ausführungsformen über eine Linearführung gesteuert. Die Linearführung befindet sich bevorzugt an der Bodenaufnahme und dem Träger, an dem die Blasformen angeordnet sind.

Die vorliegende Erfindung wird hier unter Bezugnahme auf Blasformmaschinen beschrieben, bei denen das Bodenteil stets unterhalb der Seitenträger angeordnet ist und die Behältnisse mit ihrer Mündung nach oben geblasen werden. Aus dem Stand der Technik sind jedoch auch Maschinen bekannt, bei denen die Behältnisse mit der Mündung nach unten geblasen werden. Auch auf solche Maschinen ist die Erfindung entsprechend anwendbar, wobei hier jedoch das Bodenelement gegenüber den Seitenteilen zum Öffnen der Blasform angehoben wird (allerdings auch hier von den Seitenteilen wegbewegt wird).

Die vorliegende Erfindung ist weiterhin auf ein Verfahren zum Umformen von Kunststoffvorformlingen zu Kunststoffbehältnissen gerichtet, mit einer Blasformeinrichtung, welche wenigstens mittelbar an einer um eine Schwenkachse schwenkbaren Hauptwelle angeordnet ist und welche wenigstens zwei Formträger, ein Bodenelement und zwei Blasformteile aufweist, wobei das Bodenelement und die Blasformteile geeignet sind, einen Hohlraum auszubilden, innerhalb dessen die Kunststoffvorformlinge zu den Kunststoffbehältnissen umgeformt werden und wobei das Bodenelement auf einer Bodenaufnahme angeordnet ist. Weiterhin ist eine Kopplungseinrichtung vorhanden, welche eine Öffnungsbewegung der Blasformteile mit einer Hub- und Senkbewegung des Bodenelements koppelt.

Erfindungsgemäß weist die Kopplungseinrichtung ein - bevorzugt integriertes - Kurvenelement auf, welches derart mit einem weiteren Element zusammenwirkt, dass durch ein Öffnen der Blasformeinrichtung durch Schwenken wenigstens eines Formträgers um die Schwenkachse der Hauptwelle das Kurvenelement und/oder das weitere Element in eine Drehbewegung bezüglich der Schwenkachse oder einer zu einer Schwenkachse parallelen Achse versetzt wird, durch welche die Bodenaufnahme mit dem Bodenelement abgesenkt wird.

Bevorzugt wird beim Öffnen der Blasform ein erster Formträger in einem Winkel zwischen 20° und 60° gegenüber einer Schwenkachse der Hauptwelle geschwenkt und/oder ein zweiter Formträger in einem Winkel zwischen 1° und 10° gegenüber der Schwenkachse der Hauptwelle. Bevorzugt liegt der Schwenkwinkel des ersten Formträgers zwischen 30° und 55°, bevorzugt zwischen 35° und 45° und besonders bevorzugt bei etwa 44°. Der Schwenkwinkel des zweiten Formträgers liegt bevorzugt zwischen 2° und 8°, bevorzugt zwischen 3° und 6° und besonders bevorzugt bei etwa 5°.

Bei einem vorteilhaften Verfahren wird entsprechend durch ein Schließen der Formträger das Bodenelement angehoben bzw. an die Blasformseitenteile herangefahren. Dabei wird in einem vollständig geschlossenen Zustand der Blasformeinrichtung, das Bodenelement mit den Blasformteilen verriegelt. Diese Verriegelung erfolgt, wie oben bereits erwähnt, bevorzugt kraftschlüssig und/oder formschlüssig, durch ineinanderpassende Ausgestaltungen des Bodenelements und der Blasformteile.

Weitere Vorteile und Ausführungsformen ergeben sich aus den beigefügten Zeichnungen:
Darin zeigen:
- Fig. 1a-1c: drei Darstellungen einer ersten erfindungsgemäßen Ausführungsform;
- Fig. 2a, 2b: zwei Darstellungen einer zweiten erfindungsgemäßen Ausführungsform;
- Fig. 3a-3b: zwei Darstellungen einer weiteren erfindungsgemäßen Ausführungsform;
- Fig. 4a-4d: vier Darstellungen einer Bodenhubeinheit der Blasformeinrichtung in verschiedenen Ansichten; und
- Fig. 5a-5e: fünf weitere Darstellungen der Bodenhubeinheit der Blasformeinrichtung gemäß der Fig.4a-4d.

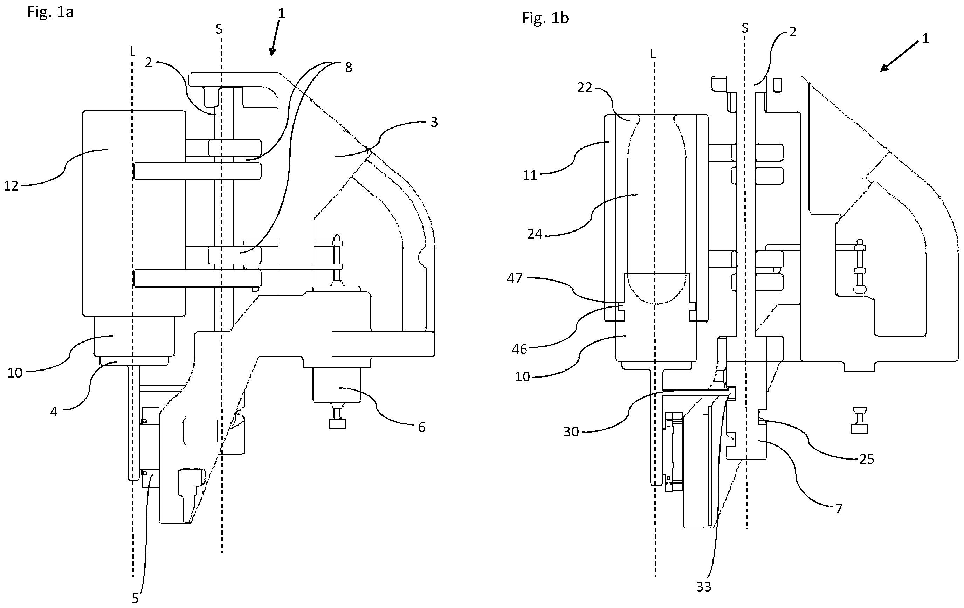

Die Fig. 1a-1c zeigen drei Darstellungen einer ersten erfindungsgemäßen Ausführungsform. Die Blasformeinrichtung 1 ist über eine Vielzahl von Verbindungsstangen 8 an einer Hauptwelle 2 angeordnet bzw. angelenkt und weist hier ein Bodenelement 10, welches auf einer Bodenaufnahme 4 angeordnet ist, zwei Blasformteile 21, 22, welche einen Hohlraum 24 ausbilden, und zwei Formträger 11, 12 auf. Wenigstens ein Formträger 11, 12 ist schwenkbar gegenüber einer Schwenkachse S der Hauptwelle 2 gelagert. Die Schwenkachse S ist dabei parallel zu einer Längsachse L der Blasform ausgerichtet. Insbesondere aus der Figur 1a ist eine Öffnungseinrichtung 6 erkennbar, welche über eine Vielzahl von Verbindungsstangen 8 mit den Formträgern 11, 12 verbunden ist. Beim Öffnen der Blasform wird wenigstens ein Formträger 11, 12 um die Schwenkachse 1 geschwenkt und die Öffnungseinrichtung 6 und die Hauptwelle 2 mit einer an der Hauptwelle angeordneten Kopplungseinrichtung 7 in eine Drehbewegung versetzt, wodurch eine Rollenanordnung 30 der Bodenaufnahme 4 an der Kopplungseinrichtung 7 geführt wird, so dass das Bodenelement 10 abgesenkt wird.

Das Bezugszeichen 5 kennzeichnet eine Linearführung, welche an der Bodenaufnahme 4 und einem Träger 3 angeordnet ist. Durch diese Linearführung 5 wird die Bewegung des Bodenelements 10 in der Längsrichtung L der Blasform unterstützt.

Figuren 1a und 1b zeigen eine erste Ausführungsform der Kopplungseinrichtung, wobei die Kopplungseinrichtung 7 hier ein integriertes Kurvenelement 25 aufweist, welches als Nut 25 in der Umfangsrichtung der Kopplungseinrichtung 7 angeordnet ist. Beim Absenken bzw. Anheben des Bodenelements wird, wie in Fig. 1b dargestellt, wenigstens eine Rolle 33 der Rollenanordnung 30 der Bodenaufnahme 4 in dieser Nut 25 geführt. Die Nut ist dabei bevorzugt geringfügig breiter als ein Durchmesser der in dieser Nut verlaufenden Rolle.

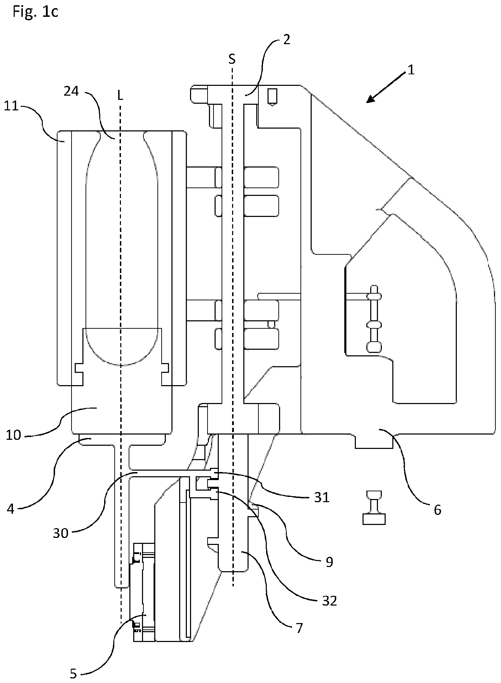

Eine Kopplungseinrichtung gemäß einer weiteren Ausführungsform wird in der Fig. 1c gezeigt. Dabei ist an der Kopplungseinrichtung 7 ein integriertes Kurvenelement 9 ausgebildet, welches als Ausprägung an der Umfangsrichtung der Kopplungseinrichtung 7 angeordnet ist. Dabei ist erkennbar, dass die Bodenaufnahme 4 die Rollenanordnung 30 mit einer oberen Rolle 31 und einer unteren Rolle 32 aufweist, welche das Kurvenelement 9 zwischen sich aufnehmen, während die Rollenanordnung 30 an diesem Kurvenelement 9 geführt wird.

Weiterhin ist aus der Fig. 1b eine Fixiereinrichtung 46, welche an dem Bodenelement 10 angeordnet ist und eine entsprechende Fixiereinrichtung 47 der Blasformteile 21, 22, welche in einem geschlossenen Zustand der Blasformeinrichtung ineinandergreifen und das Bodenelement 10 gegenüber der Blasform fixieren, erkennbar.

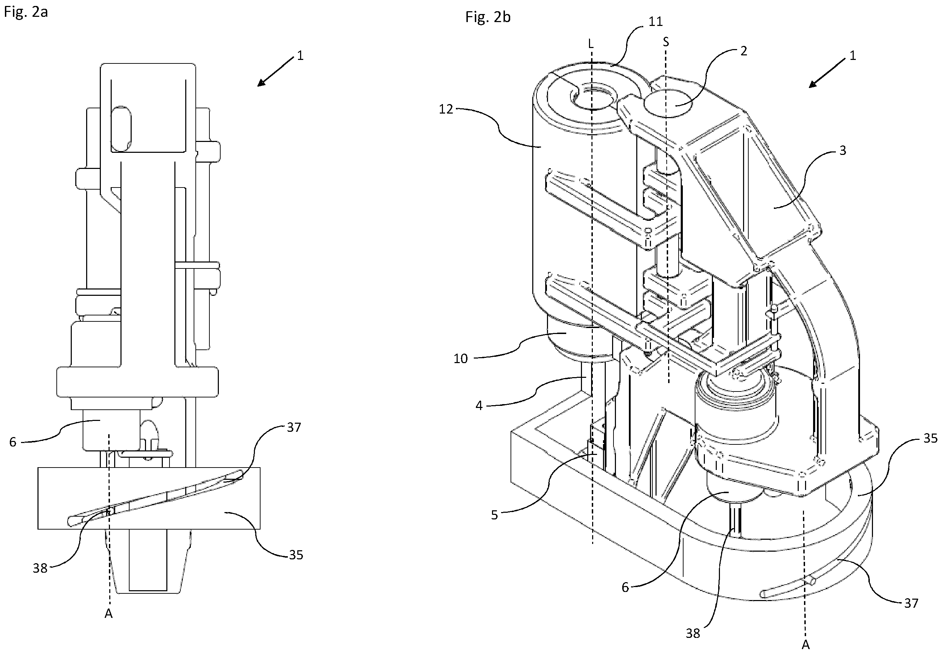

Die Fig. 2a und 2b zeigen eine weitere erfindungsgemäße Ausführungsform. An der Bodenaufnahme 4 ist eine Kopplungseinrichtung 35 in Form eines Gestells 35 angeordnet, in welches ein Kurvenelement 37 integriert ist. In dieser Ausführungsform ist insbesondere aus Fig. 2b erkennbar, dass hier eine Rollenanordnung 38 an der Öffnungseinrichtung 6 angeordnet ist und in dem Kurvenelement 37 geführt wird. Auch ist aus Fig. 2b erkennbar, dass das Gestell 35 nicht vollständig geschlossen ist, wobei es aber auch möglich ist, es vollständig zu verschließen. Durch das Öffnen der Blasform wird hier wiederum die Öffnungseinrichtung 6 in eine Drehbewegung versetzt, wodurch die Rollenanordnung 38 in dem Kurvenelement 37 verfahren wird und das Bodenelement 10 abgesenkt wird. Auch ist, insbesondere in Fig. 2b wieder die Linearführung 5 erkennbar.

Das Bezugszeichen A kennzeichnet hier eine weitere Achse, welche parallel zu der Schwenkachse S verläuft. Durch das Öffnen der Formträger wird die Rollenanordnung 38 in eine Drehbewegung um die Achse A versetzt.

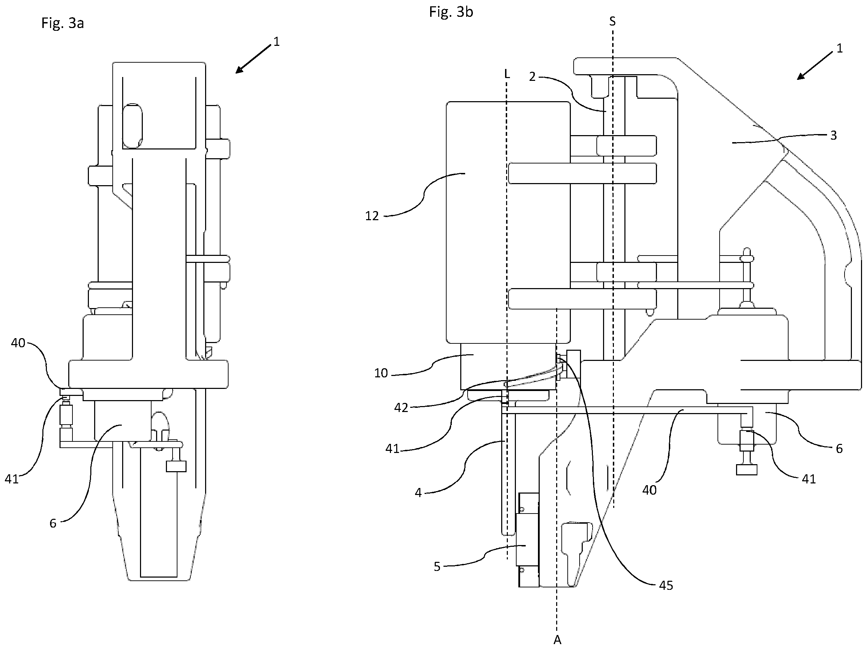

In den Fig. 3a-3b wird eine weitere erfindungsgemäße Ausführungsform gezeigt. Die Bodenaufnahme 4 ist hier drehbar mit dem Bodenelement 10 gelagert und über eine Kopplungseinrichtung 40 in Form eines Hebels 40 mit wenigstens einem und bevorzugt zwei Bewegungsgelenken 41 mit der Öffnungseinrichtung 6 verbunden. Bei dieser Ausführungsform ist ein Kurvenelement 42 direkt in das Bodenelement 10 integriert. Durch die Drehbewegung der Öffnungseinrichtung 6 wird über den Hebel 40 auch die Bodenaufnahme 4 und dementsprechend das Bodenelement 10 in eine Drehbewegung versetzt, so dass eine Rollenanordnung 45 mit wenigstens zwei Rollen das Kurvenelement 42 des Bodenelements 10 zwischen sich aufnimmt und das Bodenelement 10 abgesenkt wird. Denkbar ist dabei jedoch auch, dass das Kurvenelement 42 hier wieder als Nut ausgebildet ist, so dass wenigstens eine Rolle der Rollenanordnung 45 innerhalb dieser Nut geführt wird. Das Bezugszeichen 5 in Fig. 3b kennzeichnet hier wieder die Linearführung des Bodenelements. Die Achse A kennzeichnet hier ebenfalls wieder eine zu der Schwenkachse S parallele Achse, um welche bei der Öffnung der Formträger die Rollenanordnung 45 drehbar ist.

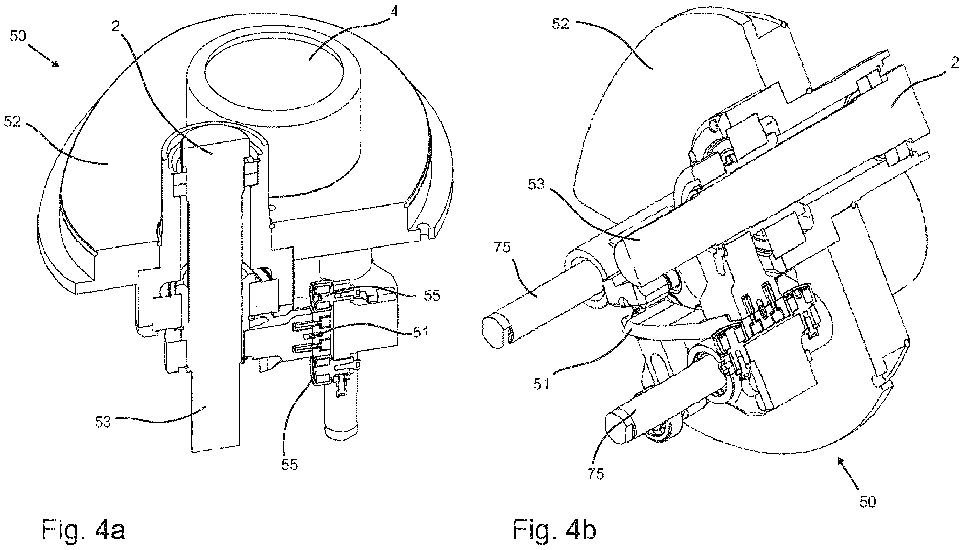

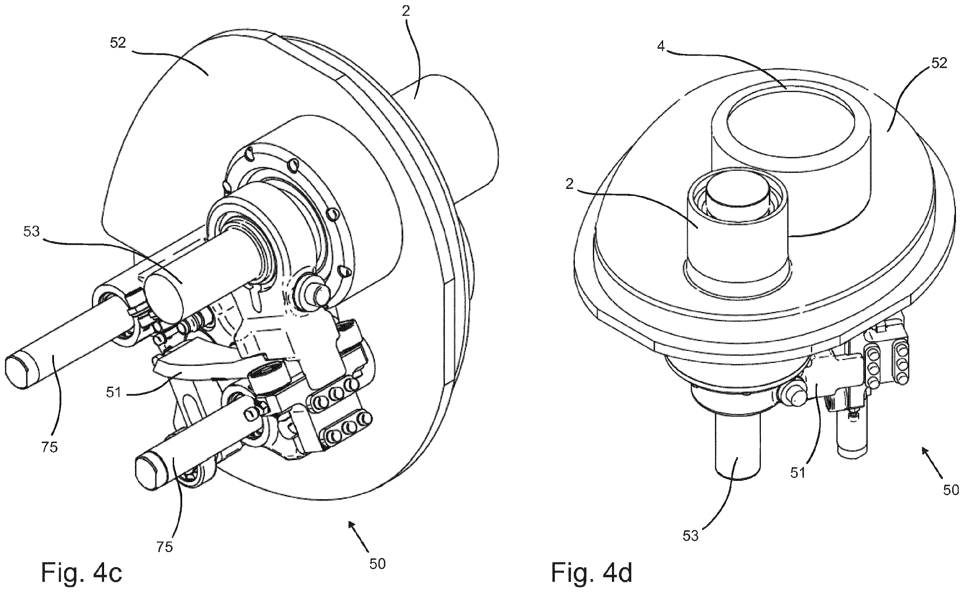

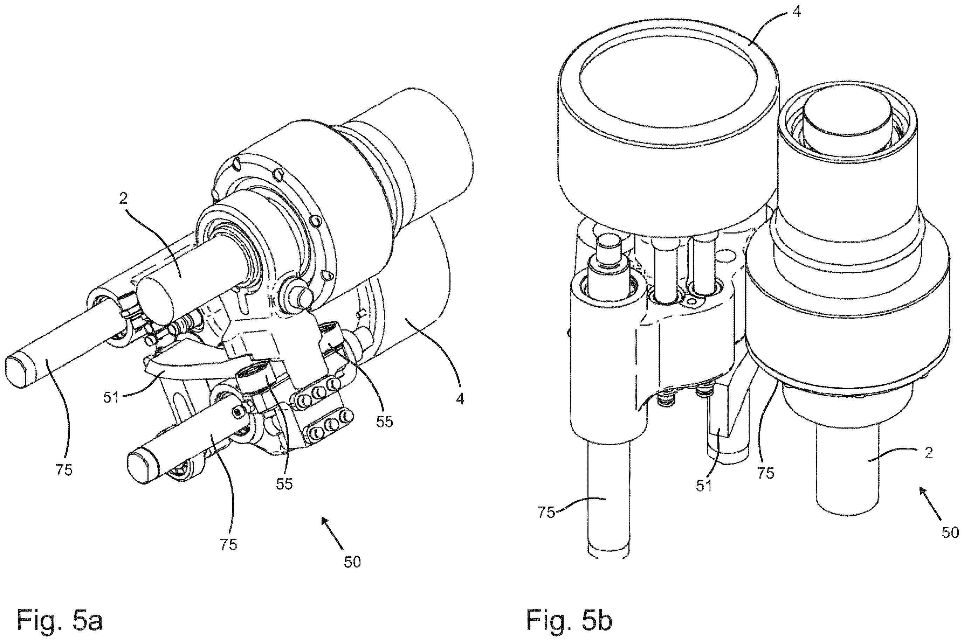

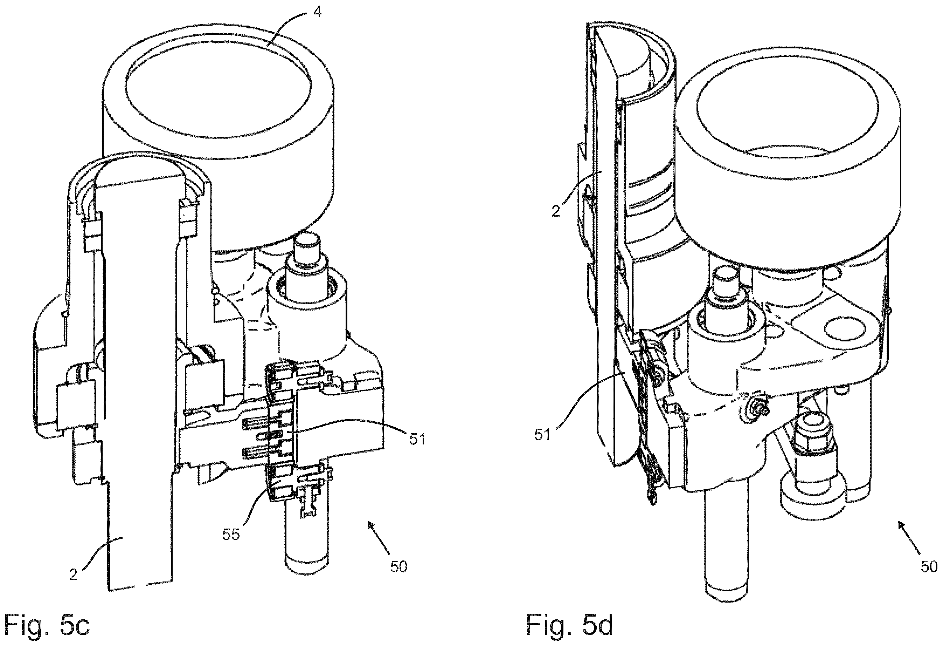

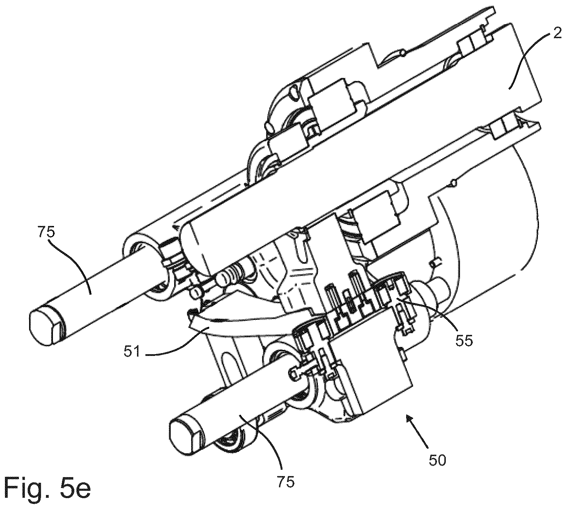

Fig. 4a-4d zeigen vier Darstellungen einer Bodenhubeinheit 50 der Blasformeinrichtung in verschiedenen Ansichten. Das Bezugszeichen 75 kennzeichnet hier eine Öffnungs- und Bewegungseinrichtung für das Öffnen der Blasform und für die Hub- und Senkbewegung des Bodenelements, so dass hier nochmals verdeutlicht wird, dass diese Bewegungen miteinander gekoppelt sind. Das Bezugszeichen 51 kennzeichnet ein Kurvensegment, welches die Hub- und Senkbewegung des Bodenelements unterstützt, indem wenigstens eine Führungsrolle 55 und bevorzugt zwei Führungsrollen 55, an dem Kurvensegment geführt werden. Insbesondere ist aus Fig. 4a erkennbar, dass sowohl die Hauptwelle 2 als auch die Bodenaufnahme 4 auf einer gemeinsamen Aufnahme 52 angeordnet sind. Diese Aufnahme 52 dient dabei insbesondere dazu, die Blasformeinrichtung innerhalb eines Reinraums anzuordnen und diesen Reinraum von der Umgebung abzutrennen. Das Bezugszeichen 53 kennzeichnet einen unteren Bereich der Hauptwelle 2, welcher außerhalb des Reinraums angeordnet ist. Die Fig. 5a-5e zeigen weitere Darstellungen der Bodenhubeinheit 50 gemäß der Fig. 4a-4d. Aus Gründen der Übersichtlichkeit wurde hier allerdings die Aufnahme nicht dargestellt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Blasformeinrichtung
- 2: Hauptwelle
- 3: Träger
- 4: Bodenaufnahme
- 5: Linearführung
- 6: Öffnungseinrichtung
- 7: Kopplungseinrichtung
- 8: Verbindungsstangen
- 9: Kurvenelement
- 10: Bodenelement
- 11: erster Formträger
- 12: zweiter Formträger
- 21: Blasformteil
- 22: Blasformteil
- 24: Hohlraum
- 25: Kurvenelement, Nut
- 30: Rollenanordnung, weiteres Element der Bodenaufnahme
- 31: obere Rolle
- 32: untere Rolle
- 33: Rolle
- 35: Kopplungseinrichtung, Gestell
- 37: Kurvenelement
- 38: Rollenanordnung, weiteres Element
- 40: Kopplungseinrichtung, Hebel mit Bewegungsgelenk
- 41: Bewegungsgelenk
- 42: Kurvenelement
- 45: Rollenanordnung, weiteres Element
- 46: Fixiereinrichtung Bodenelement
- 47: Fixiereinrichtung Blasformteile
- 50: Bodenhubeinheit
- 51: Kurvensegment
- 52: Aufnahme
- 53: unterer Bereich der Hauptwelle
- 55: Führungsrolle
- 75: Öffnungs- und Bewegungseinrichtung

- L: Längsachse der Blasform
- S: Schwenkachse der Hauptwelle 2
- A: Achse

## Patentansprüche

1. Vorrichtung zum Umformen von Kunststoffvorformlingen zu Kunststoffbehältnissen mit einer Blasformeinrichtung (1), welche wenigstens mittelbar an einer um eine Schwenkachse (S) schwenkbaren Hauptwelle (2) angeordnet ist und welche wenigstens zwei Formträger (11, 12), ein Bodenelement (10) und zwei Blasformteile (21, 22) aufweist, wobei das Bodenelement (10) und die Blasformteile (21, 22) geeignet sind, einen Hohlraum (24) auszubilden, innerhalb dessen die Kunststoffvorformlinge zu den Kunststoffbehältnissen umformbar sind und das Bodenelement (10) auf einer Bodenaufnahme (4) angeordnet ist und mit einer Kopplungseinrichtung (7, 35, 40), welche eine Öffnungsbewegung der Blasformteile (21, 22) mit einer Hub- und Senkbewegung des Bodenelements (10) gegenüber den Blasformteilen (21,22) koppelt, **dadurch gekennzeichnet, dass**
die Kopplungseinrichtung (7, 35, 40) ein Kurvenelement (9, 25, 37, 42) aufweist, welches derart mit einem weiteren Element (30, 38, 45) zusammenwirkt, dass durch ein Öffnen der Blasformeinrichtung (1) durch Schwenken wenigstens eines Formträgers (11, 12) um die Schwenkachse (S) der Hauptwelle (2) das Kurvenelement (9, 25) und/oder das weitere Element (38,45) in eine Drehbewegung bezüglich der Schwenkachse (S) oder einer zu der Schwenkachse (S) parallelen Achse (A) versetzbar ist, durch welche die Bodenaufnahme (4) mit dem Bodenelement (10) absenkbar ist, wobei die Kopplungseinrichtung (7) direkt an der Hauptwelle (2) angeordnet ist.

2. Vorrichtung nach Anspruch 1,
**dadurch gekennzeichnet, dass**
es sich bei dem weiteren Element um eine Rollenanordnung (30, 38, 45) mit wenigstens einer Rolle handelt, welche in dem Kurvenelement (9, 25, 37, 42) führbar ist.

3. Vorrichtung nach zumindest einem der vorangegangenen Ansprüche,
**dadurch gekennzeichnet, dass**
an dem Bodenelement (10) bzw. der Bodenaufnahme (4) ein elastisches Dämpfungselement angeordnet ist.

4. Vorrichtung nach zumindest einem der vorangegangenen Ansprüche,
**dadurch gekennzeichnet, dass**
die Vorrichtung einen drehbaren Träger aufweist, an dem eine Vielzahl dieser Blasformeinrichtungen (1) angeordnet ist.

5. Vorrichtung nach zumindest einem der vorangegangenen Ansprüche,
**dadurch gekennzeichnet, dass**
der drehbare Träger innerhalb eines Reinraums (55) angeordnet ist.

6. Vorrichtung nach einem der vorangegangenen Ansprüche,
**dadurch gekennzeichnet, dass**
ein erster Formträger (11) in einem Winkel zwischen 20° und 60° gegenüber der durch die Hauptwelle (2) definierten Schwenkachse (S) schwenkbar ist und/oder ein zweiter Formträger (12) in einem Winkel zwischen 1° und 10° gegenüber der durch die Hauptwelle (2) definierten Schwenkachse (S) schwenkbar ist.

7. Vorrichtung nach einem der vorangegangenen Ansprüche,
**dadurch gekennzeichnet, dass**
der erste Formträger (11) und der zweite Formträger (12) aus unterschiedlichen Materialien bestehen.

8. Vorrichtung nach einem der vorangegangenen Ansprüche,
**dadurch gekennzeichnet, dass**
das Bodenelement (10) eine Fixiereinrichtung (46) aufweist, welche das Bodenelement (10) in einem geschlossenen Zustand der Blasform gegenüber den Blasformteilen (21, 22) fixiert.

9. Verfahren zum Umformen von Kunststoffvorformlingen zu Kunststoffbehältnissen mit einer Blasformeinrichtung (1), welche wenigstens mittelbar an einer um eine Schwenkachse (S) schwenkbaren Hauptwelle (2) angeordnet ist und welche wenigstens zwei Formträger (11, 12), ein Bodenelement (10) und zwei Blasformteile (21, 22) aufweist, wobei das Bodenelement (10) und die Blasformteile (21, 22) geeignet sind einen Hohlraum (24) auszubilden, innerhalb dessen die Kunststoffvorformlinge zu den Kunststoffbehältnissen umgeformt werden und das Bodenelement (10) auf einer Bodenaufnahme (4) angeordnet ist und mit einer Kopplungseinrichtung (7, 35, 40), welche eine Öffnungsbewegung der Blasformteile (21, 22) mit einer Hub- und Senkbewegung des Bodenelements (10) gegenüber den Blasformteilen koppelt, **dadurch gekennzeichnet, dass**
die Kopplungseinrichtung (7, 35, 40) ein Kurvenelement (9, 25, 37, 42) aufweist, welches derart mit einem weiteren Element (30, 38, 45) zusammenwirkt, dass durch ein Öffnen der Blasformeinrichtung (1) durch Schwenken wenigstens eines Formträgers (11, 12) um die Schwenkachse (S) der Hauptwelle (2) das Kurvenelement (9, 25) und/oder das weitere Element (38,45) in eine Drehbewegung bezüglich der Schwenkachse (S) oder einer zu der Schwenkachse (S) parallelen Achse (A) versetzt wird, durch welche die Bodenaufnahme (4) mit dem Bodenelement (10) abgesenkt wird, wobei die Kopplungseinrichtung (7) direkt an der Hauptwelle (2) angeordnet ist.

10. Verfahren nach Anspruch 9,
**dadurch gekennzeichnet, dass**
beim Öffnen der Formträger (11, 12), ein erster Formträger (11) in einem Winkel zwischen 20° und 60° gegenüber einer Schwenkachse (S) der Hauptwelle (2) geschwenkt wird und/oder ein zweiter Formträger (12) in einem Winkel zwischen 1° und 10° gegenüber der Schwenkachse (S) der Hauptwelle (2) geschwenkt wird.

## Claims

1. Apparatus for forming plastic preforms into plastic containers with a blow moulding device (1), which is arranged at least indirectly on a main shaft (2) that is pivotable about a pivot axis (S), and which comprises at least two mould carriers (11, 12), a base element (10) and two blow mould parts (21, 22), wherein the base element (10) and the blow mould parts (21, 22) are suitable for forming a cavity (24) inside which the plastic preforms can be formed into the plastic containers, and the base element (10) is arranged on a base holder (4), and with a coupling device (7, 35, 40) which couples an opening movement of the blow mould parts (21, 22) to a lift and lower movement of the base element (10) relative to the blow mould parts (21,22),
**characterised in that**
the coupling device (7, 35, 40) has a curve element (9, 25, 37, 42) which cooperates with a further element (30, 38, 45) such that, by opening of the blow moulding device (1) by pivoting of at least one mould carrier (11, 12) about the pivot axis (S) of the main shaft (2), the curve element (9, 25) and/or the further element (38, 45) can be brought into a rotational movement relative to the pivot axis (S) or an axis (A) parallel to the pivot axis (S), via which the base holder (4) with the base element (10) can be lowered, wherein the coupling device (7) is arranged directly on the main shaft (2).

2. Apparatus according to claim 1,
**characterised in that**
the further element is a roller arrangement (30, 38, 45) with at least one roller which can be guided in the curve element (9, 25, 37, 42).

3. Apparatus according to at least one of the preceding claims,
**characterised in that**
an elastic damping element is arranged on the base element (10) or on the base holder (4).

4. Apparatus according to at least one of the preceding claims,
**characterised in that**
the apparatus has a rotatable carrier on which a plurality of these blow moulding devices (1) is arranged.

5. Apparatus according to at least one of the preceding claims,
**characterised in that**
the rotatable carrier is arranged inside a clean room (55).

6. Apparatus according to any of the preceding claims,
**characterised in that**
a first mould carrier (11) is pivotable in an angle between 20° and 60° relative to the pivot axis (S) defined by the main shaft (2), and/or a second mould carrier (12) is pivotable in an angle between 1° and 10° relative to the pivot axis (S) defined by the main shaft (2).

7. Apparatus according to any of the preceding claims,
**characterised in that**
the first mould carrier (11) and the second mould carrier (12) consist of different materials.

8. Apparatus according to any of the preceding claims,
**characterised in that**
the base element (10) has a fixing device (46) which fixes the base element (10) relative to the blow mould parts (21, 22) when the blow mould is in a closed state.

9. Method for forming plastic preforms into plastic containers, with a blow moulding device (1) which is arranged at least indirectly on a main shaft (2) that is pivotable about a pivot axis (S), and which comprises at least two mould carriers (11, 12), a base element (10) and two blow mould parts (21, 22), wherein the base element (10) and the blow mould parts (21, 22) are suitable for forming a cavity (24), inside which the plastic preforms can be formed into the plastic containers, and the base element (10) is arranged on a base holder (4), and with a coupling device (7, 35, 40) which couples an opening movement of the blow mould parts (21, 22) with a lift and lower movement of the base element (10) relative to the blow mould parts,
**characterised in that**
the coupling device (7, 35, 40) has a curve element (9, 25, 37, 42) which cooperates with a further element (30, 38, 45) such that, by opening of the blow moulding device (1) by pivoting of at least one mould carrier (11, 12) about the pivot axis (S) of the main shaft (2), the curve element (9, 25) and/or the further element (38, 45) is brought into a rotational movement relative to the pivot axis (S) or an axis (A) parallel to the pivot axis (S), via which the base holder (4) with the base element (10) is lowered, wherein the coupling device (7) is arranged directly on the main shaft (2).

10. Method according to claim 9,
**characterised in that**
on opening the mould carriers (11, 12), a first mould carrier (11) is pivoted in an angle between 20° and 60° relative to the pivot axis (S) defined by the main shaft (2), and/or a second mould carrier (12) is pivoted in an angle between 1° and 10° relative to the pivot axis (S) of the main shaft (2).

## Revendications

1. Dispositif de formage de préformes en plastique en contenants en plastique avec un dispositif de moulage par soufflage (1) qui est disposé au moins indirectement sur un arbre principal (2) pouvant pivoter autour d'un axe de pivotement (S) et qui présente au moins deux supports de moule (11, 12), un élément de fond (10) et deux parties de moule de soufflage (21, 22), dans lequel l'élément de fond (10) et les parties de moule de soufflage (21, 22) sont adaptés pour former une cavité (24) à l'intérieur de laquelle les préformes en plastique peuvent être formées en contenants en plastique et l'élément de fond (10) est disposé sur un réceptacle de fond (4) et avec un dispositif d'accouplement (7, 35, 40) qui couple un mouvement d'ouverture des parties de moule de soufflage (21, 22) avec un mouvement de levage et d'abaissement de l'élément de fond (10) par rapport aux parties de moule de soufflage (21, 22),
**caractérisé en ce que**
le dispositif d'accouplement (7, 35, 40) présente un élément de came (9, 25, 37, 42) qui coopère avec un élement supplémentaire (30, 38, 45) de telle manière que, lors de l'ouverture du dispositif de soufflage (1) par pivotement d'au moins un support de moule (11, 12) autour de l'axe de pivotement (S) de l'arbre principal (2), l'élément de came (9, 25) et/ou l'élement supplémentaire (38, 45) effectue un mouvement de rotation par rapport à l'axe de pivotement (S) ou à un axe (A) parallèle à l'axe de pivotement (S) via lequel le réceptacle de fond (4) est abaissé avec l'élément de fond (10), le dispositif d'accouplement (7) étant disposé directement sur l'arbre principal (2).

2. Dispositif selon la revendication 1,
**caractérisé en ce que**
l'élément supplémentaire est un agencement de rouleaux (30, 38, 45) avec au moins un rouleau qui peut être guidé dans l'élément de came (9, 25, 37, 42).

3. Dispositif selon au moins l'une des revendications précédentes,
**caractérisé en ce que**
un élément amortisseur élastique est disposé sur l'élément de fond (10) ou le réceptacle de fond (4).

4. Dispositif selon au moins l'une des revendications précédentes,
**caractérisé en ce que**
le dispositif présente un support rotatif sur lequel une pluralité de dispositifs de moulage par soufflage (1) est disposée.

5. Dispositif selon au moins l'une des revendications précédentes,
**caractérisé en ce que**
le support rotatif est disposé dans une salle blanche (55).

6. Dispositif selon l'une des revendications précédentes,
**caractérisé en ce que**
un premier support de moule (11) peut pivoter selon un angle compris entre 20 ° et 60 ° par rapport à l'axe de pivotement (S) défini par l'arbre principal (2) et/ou un deuxième support de moule (12) peut pivoter selon un angle compris entre 1 ° et 10 ° par rapport à l'axe de pivotement (S) défini par l'arbre principal (2).

7. Dispositif selon l'une des revendications précédentes,
**caractérisé en ce que**
le premier support de moule (11) et le second support de moule (12) sont constitués de matériaux différents.

8. Dispositif selon l'une des revendications précédentes,
**caractérisé en ce que**
l'élément de fond (10) présente un dispositif de fixation (46) qui fixe l'élément de fond (10) par rapport aux parties de moule de soufflage (21, 22) dans un état fermé du moule de soufflage.

9. Procédé de formage de préformes en plastique en contenants en plastique avec un dispositif de moulage par soufflage (1) qui est disposé au moins indirectement sur un arbre principal (2) pouvant pivoter autour d'un axe de pivotement (S) et qui présente au moins deux supports de moule (11, 12), un élément de fond (10) et deux parties de moule de soufflage (21, 22), dans lequel l'élément de fond (10) et les parties de moule de soufflage (21, 22) sont adaptés pour former une cavité (24) à l'intérieur de laquelle les préformes en plastique sont formées en contenants en plastique et l'élément de fond (10) est disposé sur un réceptacle de fond (4) et avec un dispositif d'accouplement (7, 35, 40) qui couple un mouvement d'ouverture des parties de moule de soufflage (21, 22) avec un mouvement de levage et d'abaissement de l'élément de fond (10) par rapport aux parties de moule de soufflage,
**caractérisé en ce que**
le dispositif d'accouplement (7, 35, 40) présente un élément de came (9, 25, 37, 42) qui coopère avec un élement supplémentaire (30, 38, 45) de telle manière que, lors de l'ouverture du dispositif de soufflage (1) par pivotement d'au moins un support de moule (11, 12) autour de l'axe de pivotement (S) de l'arbre principal (2), l'élément de came (9, 25) et/ou l'élement supplémentaire (38, 45) effectue un mouvement de rotation par rapport à l'axe de pivotement (S) ou à un axe (A) parallèle à l'axe de pivotement (S) via lequel le réceptacle de fond (4) est abaissé avec l'élément de fond (10), le dispositif d'accouplement (7) étant disposé directement sur l'arbre principal (2).

10. Procédé selon la revendication 9,
**caractérisé en ce que**
lors de l'ouverture du support de moule (11, 12), un premier support de moule (11) pivote selon un angle compris entre 20 ° et 60 ° par rapport à un axe de pivotement (S) de l'arbre principal (2) et/ou un deuxième support de moule (12) pivote selon un angle compris entre 1 ° et 10 ° par rapport à l'axe de pivotement (S) de l'arbre principal (2).
